# FASCICULE DE BREVET EUROPEEN

(11) **EP 2 716 109 B1**
(45) Date de publication et mention de la délivrance du brevet: **17.10.2018**
(21) Numéro de dépôt: 12724136.2
(22) Date de dépôt: 25.05.2012
(51) Int. Cl.: H04W 48/18, H04W 8/18, H04W 88/06

(54) **DISPOSITIF, TERMINAL MOBILE , PROCÉDÉ ET PRODUIT PROGRAMME D'ORDINATEUR POUR LE CHOIX D'UNE PAIRE DES RESEAUX HôTES ET VISITES**
VORRICHTUNG, MOBILES ENDGERÄT, VERFAHREN UND KOMPUTERPROGRAMMPRODUKT ZUR AUSWAHL EINES PAARES AUS HEIMATNETZWERKEN UND BESUCHTEN NETZWERKEN
DEVICE, MOBILE TERMINAL, METHOD ET COMPUTER PROGRAM PRODUCT FOR SELECTING A PAIR OF HOME AND VISITED NETWORKS

(30) Priorité: 25.05.2011 FR 1154567
(43) Date de publication de la demande: 09.04.2014
(73) Titulaire: Mobiquithings, 06560 Valbonne (FR)
(72) Inventeur: MALASSIS, Loïc, F-92200 Neuilly-sur-Seine (FR); MARO, Frédéric, F-92160 Antony (FR); HULLIN, Cyril, F-750007 Paris (FR)
(74) Mandataire: Hautier, Nicolas
(86) Numéro de dépôt international: PCT/EP2012/059888
(87) Numéro de publication internationale: WO 2012/160201

(56) Documents cités:
- EP-A2- 2 268 090
- WO-A1-92/19078
- WO-A2-2007/103975
- US-A1- 2002 154 632
- US-A1- 2010 048 205

## Description

Le domaine technique de l'invention est celui de la téléphonie mobile et particulièrement de l'optimisation du choix d'un réseau dans le cas d'un utilisateur itinérant (roaming en anglais) muni d'un moyen de communication connecté via une carte SIM, tel un téléphone mobile.

Le problème que rencontre un utilisateur de terminal mobile itinérant est dans un premier temps de pouvoir se connecter à un réseau afin d'accéder aux différents services voix, messages, données, etc, et dans un second temps, lorsque l'offre de réseau devient plurielle, d'optimiser le choix d'un réseau.

Il convient ici de distinguer un réseau hôte, auprès duquel un utilisateur dispose, pour son terminal mobile, d'un droit d'accès par exemple au moyen d'un abonnement, d'un réseau visité. Le droit d'accès se matérialise, par exemple, par une carte SIM, et particulièrement par un code IMSI qui identifie de manière unique ledit terminal mobile auprès du réseau hôte.

Dans sa zone d'évolution habituelle, l'utilisateur connecte son terminal mobile à un réseau hôte habituel via au moins une cellule dudit réseau hôte située à portée. Cependant lorsqu'il est en déplacement, itinérant hors de portée dudit réseau hôte, ceci n'est plus possible. Au lieu de cela lorsqu'il est itinérant, l'utilisateur connecte son terminal mobile via une cellule à portée, ladite cellule appartenant à un réseau visité.

Les opérateurs des différents réseaux qui agissent, selon le cas, en tant que réseau hôte ou en tant que réseau visité, contractent entre eux des accords de réciprocité ou accords d'itinérance, en fonction notamment de leur couverture géographique, permettant à un utilisateur « d'emprunter » temporairement les moyens d'un réseau visité pour se connecter, sous réserve qu'il existe un accord entre ledit réseau visité et le réseau hôte. C'est le réseau hôte qui gère la facturation des services à l'utilisateur en cas d'utilisation d'un réseau visité possédant un accord d'itinérance avec le réseau hôte.

Selon l'art antérieur, le choix du réseau visité est arbitré par une liste de préférence ordonnée de réseaux. Cette liste est gérée et mise à jour par l'opérateur du réseau (hôte). Elle est ensuite téléchargée vers le terminal mobile, typiquement au moyen d'un protocole OTA (de l'anglais Over The Air). Le réseau interroge régulièrement le terminal mobile pour connaitre les valeurs de différents critères. En fonction de ces valeurs, le réseau actualise la liste de préférence et la télécharge vers le terminal mobile. Un tel procédé nécessite des volumes de donnée échangés et des coûts associés importants et sa durée conduit de plus à un important manque de réactivité. Un tel procédé, fonctionnant par liste de réseaux préférés est par définition statique: il ne permet de basculer d'un réseau à l'autre de la liste entre deux mises à jour, que sur perte du signal d'un réseau placé plus haut dans la liste.

Les différents réseaux, agissant tantôt comme réseau hôte et tantôt comme réseau visité, négocient des accords d'itinérance. Pour une zone géographique donnée, un réseau hôte n'a pas forcément d'accord avec tous les réseaux disponibles dans cette zone géographique et n'offre ainsi pas à un utilisateur une couverture optimale et/ou au meilleur tarif.

Les documents EP 2 268 090 décrit une solution dans laquelle on sélectionne un réseau visité puis on sélectionne un IMSI sur la base du réseau visité afin de bénéficier des accords d'itinérance les plus avantageux.

Le document US 2002/154632 décrit une solution permettant de passer d'une carte SIM à une autre carte SIM.

Le document US2010/0048205 décrit une solution dans laquelle une table est envoyée à un terminal mobile, cette table contenant des listes de réseaux classés par ordre décroissant de priorité.

Il existe alors un besoin consistant à optimiser le choix du réseau visité, afin de disposer de la meilleure qualité de réseau disponible ou/et des accords entre les opérateurs les plus avantageux.

A cet effet on prévoit selon l'invention un dispositif, dans une infrastructure de télécommunication mobile, apte à choisir un réseau visité visible par le terminal mobile et à connecter audit réseau visité choisi un terminal mobile associé à un réseau hôte, caractérisé en ce que ledit dispositif est localisé dans ledit terminal mobile, en ce qu'il est configuré de sorte à pouvoir choisir un réseau hôte parmi une pluralité de réseaux hôtes non visibles par le terminal mobile et de sorte à modifier le réseau hôte associé au terminal mobile en le remplaçant par ledit réseau hôte choisi, et en ce qu'il est configuré de sorte à effectuer le choix du réseau hôte et à effectuer le choix du réseau visité au moyen d'un ordonnancement prenant en compte au moins un critère.

Ainsi, l'invention permet, directement au niveau du dispositif présent dans le terminal mobile et en un emplacement géographique donné, le choix du réseau hôte ainsi que le choix d'un réseau visité détecté par le terminal mobile. Le terminal mobile peut alors accéder à l'ensemble des accords d'itinérance conclus entre d'une part un opérateur de réseau hôte parmi une pluralité d'opérateurs de réseaux hôte et d'autre part un opérateur de réseau visité parmi une pluralité d'opérateurs de réseaux visités.

Contrairement aux solutions existantes, le terminal mobile intégrant un dispositif selon l'invention n'est pas limité aux seuls réseaux visités ayant conclus un accord avec l'unique réseau hôte auxquels est habituellement associé le terminal mobile. Le choix du réseau visité parmi les réseaux visités accessibles par le terminal mobile peut donc s'effectuer depuis le terminal, de manière dynamique et tout en limitant le volume de données échangées avec le coeur de réseau.

L'invention permet avantageusement au terminal mobile de gérer localement sa connexion, et permet une réactivité améliorée aux changements survenant dans les critères tels que perçus par le terminal.

Un objet de la présente invention est un dispositif, dans une infrastructure de téléphonie mobile, apte à choisir un réseau visité et à connecter un terminal mobile audit réseau visité, où ledit dispositif est localisé dans ledit terminal mobile et en ce que le choix s'effectue au moyen d'un ordonnancement selon au moins un critère.

Facultativement, l'invention peut en outre présenter au moins l'une quelconque des caractéristiques optionnelles suivantes :
Le dispositif est configuré de sorte que le choix du réseau visité est effectué de manière dynamique. Avantageusement, le dispositif est configuré de sorte que le choix du réseau hôte est effectué de manière dynamique.

Selon une autre caractéristique de l'invention, le dispositif comprend un logiciel stocké dans une carte ou une puce équipée d'un microcontrôleur et apte à coopérer avec le terminal mobile pour réaliser ledit ou lesdits choix et la connexion. Typiquement, la carte est une carte SIM. Typiquement, la puce est une puce de carte SIM.

Selon une autre caractéristique de l'invention, le dispositif est configuré de sorte à effectuer le choix du réseau visité en prenant en compte au moins un premier critère et de sorte à effectuer le choix du réseau hôte en prenant en compte au moins un deuxième critère différent du premier critère.

Selon une autre caractéristique de l'invention, le dispositif est configuré de sorte à prendre en compte au moins un critère commun pour effectuer le choix du réseau visité et le choix du réseau hôte.

Selon une autre caractéristique de l'invention, le dispositif est configuré de sorte que ledit au moins un critère est sélectionné parmi :
- un niveau de puissance du signal radio reçu,
- un type de service offert,
- un type de service disponible,
- une bande passante offerte,
- une qualité de service,
- une latence,
- une heure/jour,
- une préférence utilisateur,
- un coût d'utilisation,
- un critère géographique
- un réseau visité

Selon un aspect préféré, le critère est déterminé par le terminal mobile lui-même ou par le dispositif lui-même. Selon cet aspect, le critère n'est pas déterminé par un élément du réseau puis est envoyé au terminal mobile.

Selon une autre caractéristique de l'invention, le dispositif est configuré de sorte à prendre en compte des mesures relevées par le terminal mobile afin d'évaluer le critère.

Selon une autre caractéristique de l'invention, le dispositif est configuré de sorte à recevoir une valeur de niveau de puissance de signal reçu par le terminal mobile ou une valeur de bande passante lesdites valeurs étant déterminées par le terminal mobile.

Selon une autre caractéristique de l'invention, le dispositif est configuré de sorte que le choix d'un réseau visité et le choix d'un réseau hôte utilise des règles de gestion notant chaque réseau visité détecté par le terminal mobile et chaque réseau hôte parmi la pluralité de réseaux hôte, en fonction dudit au moins un critère.

Selon une autre caractéristique de l'invention, le dispositif est configuré de sorte que le choix d'un réseau visité et le choix d'un réseau hôte, utilise des règles de gestion notant, en fonction dudit au moins un critère, des pairs formées chacune par un réseau visité détecté par le terminal mobile et un réseau hôte parmi la pluralité de réseaux hôte.

Selon une autre caractéristique de l'invention, le dispositif est configuré de sorte que ledit ordonnancement utilisé pour le choix d'un réseau visité et le choix d'un réseau hôte, produit une liste de réseaux visités et une liste de réseaux hôtes, ordonnée par ordre de préférence.

Selon une autre caractéristique de l'invention, le dispositif est agencé pour remettre à jour périodiquement ladite liste ordonnée.

Selon une autre caractéristique de l'invention, le dispositif est configuré de sorte que ladite liste ordonnée est remise à jour de manière évènementielle, à la survenue d'au moins un évènement sélectionné parmi :
- activation d'une carte SIM,
- perte d'un signal,
- découverte d'un signal,
- activation d'un terminal mobile,
- modification d'une préférence utilisateur,
- activation externe,
- la réception d'un appel ou d'un message.

Typiquement le message est un message électronique, un SMS, un MMS ou une transmission de données GPRS.

Selon une autre caractéristique de l'invention, le dispositif est configuré de manière à ce que la remise à jour de ladite liste de réseau visité, respectivement de réseau hôte, est filtrée temporellement, afin d'éviter des changements intempestifs de réseau visité, respectivement de réseau hôte.

Selon une autre caractéristique de l'invention, le dispositif est configuré de sorte que le choix du réseau visité peut s'effectuer non simultanément au choix du réseau hôte.

Selon une autre caractéristique de l'invention, le dispositif est configuré de sorte que la fréquence du choix du réseau visité diffère de la fréquence du choix du réseau hôte.

Selon une autre caractéristique de l'invention, le dispositif est configuré de sorte à comprendre pour chaque réseau hôte parmi la pluralité de réseaux hôte un identificateur identifiant de manière unique le terminal mobile, le dispositif étant en outre configuré de manière à ce que le terminal mobile endosse l'identificateur associé au réseau hôte choisi pour se connecter via ledit réseau hôte choisi.

Autrement dit, le terminal mobile est apte à modifier son identificateur, afin d'endosser un identificateur parmi ledit au moins un identificateur du réseau hôte sélectionné, pour se connecter via ledit réseau hôte. Typiquement, l'identificateur est un numéro IMSI.

De manière avantageuse, un unique numéro MSISDN est associé à l'ensemble des identificateurs (par exemple des numéros IMSI) identifiant de manière unique le terminal mobile. Ainsi, l'utilisateur du terminal mobile reste joignable au même numéro d'appel quel que soit l'identificateur endossé, c'est-à-dire quel que soit le réseau hôte auquel il est connecté. Cela permet avantageusement d'offrir une continuité de service à l'utilisateur et ses correspondants, de manière transparente et tout en permettant de sélectionner le réseau hôte le plus pertinent.

Avantageusement, le dispositif est configuré de sorte qu'en une zone géographique donnée, le dispositif effectue à la fois le choix du réseau hôte et le choix du réseau visité.

Selon un autre aspect, il est prévu un terminal mobile comprenant un dispositif selon l'invention.

Selon un mode de réalisation avantageux, le dispositif comprend un logiciel stocké dans une carte ou une puce équipée d'un microcontrôleur et apte à coopérer avec le terminal mobile pour réaliser ledit ou lesdits choix et la connexion et dans lequel le terminal mobile et la carte ou la puce sont conformés de sorte que la carte ou la puce peut être retirée ou insérée dans le terminal mobile par l'utilisateur.

Typiquement, le terminal mobile est un téléphone, un assistant numérique personnel, habituellement désigné par l'acronyme PDA pour personal digital assistant, un ordinateur portable équipé de fonction de communication par téléphone ou tout autre moyen de communication (sans fil).

Un autre aspect de l'invention concerne un procédé pour infrastructure de télécommunication mobile, comprenant une étape de choix d'un réseau visité et une étape de connexion audit réseau visité choisi d'un terminal mobile associé à un réseau hôte, caractérisé en ce qu'il comprend une étape comprenant le choix d'un réseau hôte parmi une pluralité de réseaux hôtes associés au terminal mobile, le choix du réseau hôte et le choix du réseau visité étant effectuées dans ledit terminal mobile et effectués au moyen d'un ordonnancement prenant en compte au moins un critère.

Préférentiellement, le choix du réseau visité et/ou le choix du réseau hôte est effectué de manière dynamique.

Selon un mode de réalisation avantageux et optionnel, chaque réseau hôte parmi la pluralité de réseaux hôte est associé à un identificateur identifiant de manière unique le terminal mobile. En outre le terminal mobile endosse l'identificateur associé au réseau hôte choisi pour se connecter via ledit réseau hôte choisi.

Selon un mode de réalisation avantageux et optionnel, on associe à chaque terminal mobile un numéro d'appel unique (MSISDN), on maintien une base de données dans laquelle le numéro d'appel unique à chaque terminal mobile est associé à l'ensemble des identificateurs associés aux réseaux hôtes pour ce terminal mobile. Ainsi, le terminal mobile peut être joint à numéro d'appel unique quel que soit l'identificateur endossé.

Le dispositif est donc configuré pour sélectionner à la fois un réseau hôte et un réseau visité à un instant donné et/ou à une même position du terminal mobile. Ainsi, à un emplacement donné, le dispositif est configuré pour sélectionner un réseau hôte parmi plusieurs réseau hôtes non accessibles par le terminal mobile depuis cet emplacement (c'est-à-dire qu'ils ne sont pas à portée du terminal mobile 1) et est configuré pour sélectionner un réseau visité parmi plusieurs réseaux visités accessibles depuis cet emplacement par le terminal mobile (c'est-à-dire qu'ils sont à portée du terminal mobile 1). En fonction du ou des critères d'ordonnancement, le dispositif effectue cette double sélection réseau hôte/réseau visité.

De préférence, les réseaux hôtes ne sont pas à portée du terminal mobile et les réseaux visités sont à portée du terminal mobile lorsque le dispositif effectue le choix du réseau hôte et le choix du réseau visité. Le terminal mobile est de préférence dans une situation de roaming ou d'itinérance classique.

Un autre aspect de l'invention concerne un procédé pour infrastructure de télécommunication mobile, de détermination d'une cartographie de couverture d'une zone géographique donnée, Ce procédé comprend une étape de récupération auprès des terminaux fixes ou mobiles présents dans la zone des données. Ces données sont relatives à au moins l'un parmi les paramètres suivants : réseau visité, réseau hôte, localisation du terminal, durant une période de temps déterminée.

Un autre aspect de l'invention concerne un produit programme d'ordinateur comprenant des instructions aptes à être exécutées par un ordinateur, lesdites instructions permettant de mettre en oeuvre le procédé.

Selon un autre aspect, l'invention porte également sur une carte comprenant un microprocesseur et des moyens de mémorisation comprenant un programme d'ordinateur contenant des instructions permettant de mettre en oeuvre le procédé. Selon un mode de réalisation avantageux, la carte est configurée pour être insérée et retirée du terminal mobile par l'utilisateur.

D'autres caractéristiques, détails et avantages de l'invention ressortiront plus clairement de la description détaillée donnée ci-après à titre indicatif en relation avec des dessins sur lesquels :

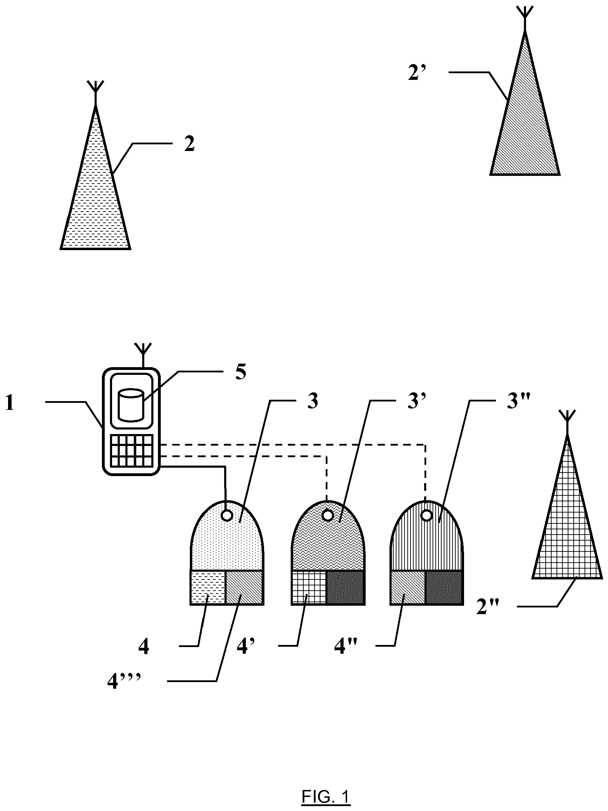

- la figure 1 présente un environnement de téléphonie mobile selon l'invention

Selon la figure 1, un terminal mobile 1 est représenté. Un terminal mobile 1 s'entend ici d'un téléphone mobile, d'un téléphone intelligent (smartphone), d'un assistant personnel (PDA), d'un ordinateur portable, ou de tout appareil apte à se connecter à un réseau de téléphonie mobile sans fil cellulaire.

Ledit terminal mobile 1 se trouve dans une zone géographique où il est à portée de trois réseaux 2, 2', 2 ", figurés chacun par une cellule et repérés chacun par une texture graphique différente. Ces trois réseaux visités potentiels 2, 2', 2 ", sont potentiellement disponibles et sont détectés par le terminal mobile 1.

Le même terminal mobile 1 dispose de droit d'accès via plusieurs réseaux hôtes 3, 3', 3", figurés par des étiquettes attachées au terminal mobile 1 et repérés chacun par une texture graphique différente. Chaque réseau hôte 3, 3', 3" permet de bénéficier des accords d'itinérance qu'il a négocié et figurés par des textures graphique à la base de l'étiquette, reprenant les textures graphiques des cellules des réseaux visités 2, 2', 2". Dans un mode de réalisation typique, rencontré classiquement dans une situation de roaming (d'itinérance), les réseaux hôtes 3, 3', 3" ne sont pas accessibles par le terminal mobile 1 depuis la zone géographique dans laquelle il se trouve, c'est-à-dire qu'ils ne sont pas à portée du terminal mobile 1.

Ainsi un premier réseau hôte 3 dispose d'un accord d'itinérance 4 avec le réseau visité 2. Il dispose encore d'un accord d'itinérance 4"' avec le réseau visité 2'. Un deuxième réseau hôte 3' dispose d'un accord d'itinérance 4' avec le réseau visité 2". Un troisième réseau hôte 3" dispose d'un accord d'itinérance 4" avec le réseau visité 2'.

Le terminal mobile 1 a ainsi le choix de se connecter au réseau visité 2 via le réseau hôte 3, au réseau visité 2" via le réseau hôte 3', ou encore au réseau visité 2' via le réseau hôte 3 ou le réseau hôte 3". Il convient alors d'optimiser le choix des moyens de connexion en choisissant un réseau hôte et un réseau visité.

Ainsi, de manière particulièrement avantageuse, l'utilisateur du terminal mobile 1 n'est pas limité aux seuls réseaux visités ayant passé des accords d'itinérance avec l'unique opérateur de réseau hôte attaché habituellement à une carte SIM.

Afin d'éviter les importants et préjudiciables échanges de données avec le réseau de l'art antérieur et augmenter la réactivité, cette optimisation est réalisée selon l'invention, par un dispositif avantageusement localisé dans le terminal mobile 1 lui-même. De plus cette optimisation est réalisée au moyen d'un ordonnancement selon au moins un critère.

Selon un mode de réalisation ce dispositif comprend une application logicielle 5 installée dans une carte personnelle ou un jeton personnel du terminal mobile, typiquement une carte SIM. Dans la suite de la description on désignera carte SIM le moyen embarquant le logiciel et éventuellement un micro processeur bien que l'invention ne soit pas limitative des seules cartes SIM. Une telle application logicielle 5 permet d'offrir une autonomie décisionnelle au principal intéressé par le choix du moyen de connexion : le terminal mobile 1 et son utilisateur. Avantageusement, la carte peut être insérée ou retirée du terminal mobile par l'utilisateur.

Ladite application logicielle 5 peut être réalisée au moyen d'une application Java logée dans la carte SIM.

Cette application analyse des critères, locaux ou mesurables depuis le terminal mobile 1, et détermine, par exemple au moyen de règles de gestion, des « notes » ou pondérations relatives des différents réseaux tant visités 2, 2', 2", que hôtes 3, 3', 3". Ceci permet alors de déterminer un réseau visité optimal et/ou un réseau hôte optimal, et de connecter le terminal mobile 1 audit réseau visité optimal, via ledit réseau hôte optimal, afin d'accéder aux services souhaités dans les meilleures conditions de qualité, de disponibilité et/ou de coût pour l'utilisateur.

Une telle caractéristique permet alors avantageusement de réaliser un choix/arbitrage tant du réseau hôte que du réseau visité de manière locale, autonome et surtout dynamique.

L'invention permet ainsi d'effectuer le choix d'un réseau visité parmi une pluralité de réseaux visités auxquels le terminal mobile a potentiellement accès et en fonction d'au moins un critère. D'autres solutions, différentes de l'invention, pourraient prévoir, dans le meilleur des cas, une sélection du réseau visité dans une zone géographique qui consisterait à descendre une liste préétablie listant par ordre de préférence des réseaux habituellement présents dans cette zone et à retenir le réseau visité ayant l'ordre de préférence le plus élevé. De telles listes sont établies par l'opérateur du réseau hôte. Dans ces solutions, la sélection du réseau visité ne repose donc pas sur un choix opéré par le terminal ni sur un choix prenant au moins un critère mais repose sur une liste préétablie et fournie par une entité externe au terminal mobile.

Le terme dynamique s'entend ici en ce qu'un agent de décision local au terminal mobile, par exemple disposé dans la carte SIM, et donc autonome relativement aux opérateurs, peut réaliser un arbitrage de réseau hôte et/ou de réseau visité, à tout instant, y compris en cours de déplacement et/ou de communication, en fonction d'au moins un critère. Ainsi un changement de réseau (hôte et/ou visité), ou même simplement une mise à jour d'un ordre de priorité d'un réseau (hôte et/ou visité), peut être décidé dès qu'au moins un seuil d'au moins un critère est franchi.

L'aspect dynamique dudit arbitrage est une caractéristique importante. Il peut être illustré par les deux exemples suivants.

Selon un premier exemple non limitatif, un dispositif selon l'invention est embarqué dans un train afin d'offrir des services de communication à son utilisateur, entre Paris et Bruxelles. En tout point de son trajet, ledit dispositif doit accrocher des cellules radio afin de permettre une connexion données (GPRS, data 3G, ...) qui selon un premier critère offre la meilleure bande passante disponible afin de pouvoir offrir un débit maximum à l'utilisateur. Dynamiquement, en temps réel, tout au long du trajet du train, le dispositif (via un agent autonome dans la SIM) réalise des arbitrages de réseau visité pour s'accrocher aux cellules des réseaux offrant une connexion données avec la meilleure bande passante. Parallèlement, le long du trajet, au gré des cellules accrochées alternativement auprès des différentes opérateurs : SFR, Orange, et Bouygues en France, et Mobistar, Proximus et Base en Belgique, le dispositif choisit, surtout au moment du franchissement de la frontière entre la France et la Belgique, de se connecter à Orange, Bouygues, SFR, Mobistar, Proximus, Base, via un réseau hôte (Orange, Télécom Italia, Deutche Telecom, etc...), choisi parmi des opérateurs avec lesquels des accords d'itinérance de qualité ont été établis. Se conjuguent donc en parallèle et dynamiquement le choix du réseau visité pour répondre aux besoins d'usage du moyen de communication de l'utilisateur et le choix du réseau hôte qui offre les meilleures conditions pour les réseaux visités retenus.

Selon un second exemple non limitatif, pour un usage fixe, une caméra de surveillance se connecte à un réseau, typiquement à un réseau Ethernet, via un dispositif selon l'invention, afin de transmettre une vidéo temps réel. Cette connexion est la plupart du temps réalisée via Orange. Cependant, aux horaires de sortie des bureaux, SFR offre une meilleure qualité de service. Par exemple, SFR offre une meilleur disponibilité ou une meilleur bande passante. Le dispositif selon l'invention qui équipe la caméra change alors automatiquement de réseau visité de Orange vers SFR, puis ultérieurement de SFR vers Orange. De plus, ledit dispositif peut être connecté à Orange (réseau visité) via un accord avec Orange (réseau hôte) en direct, et à SFR (réseau visité) via un accord avec Vodafone group (réseau hôte).

L'ordonnancement, tant du réseau visité 2, 2', 2", que du réseau hôte 3, 3', 3" est réalisé en se basant sur un ensemble de critères d'ordonnancement. Ce ou ces critères d'ordonnancement sont sélectionnés parmi les critères influant sur la qualité, la disponibilité et/ou le coût pour l'utilisateur de la connexion.

Ces critères peuvent ainsi être sélectionnés parmi : un niveau de puissance reçu, un type de service offert et sa disponibilité temps réel, une bande passante offerte, une qualité de service, une latence, une heure/jour, une préférence utilisateur, un coût d'utilisation, un critère géographique. Le niveau de puissance reçu détermine pour un réseau visité la qualité de la transmission qui peut être établie. Le type de service offert (GPRS, EDGE, 3G, LTE), la bande passante offerte, la qualité de service (QoS) déterminent le ou les services que l'utilisateur peut attendre d'une connexion. En fonction du besoin de l'utilisateur, certains réseaux sont alors favorisés ou rejetés du processus de choix. Ces critères peuvent ainsi intervenir dans le processus de choix, en fonction des spécifications (par exemple l'utilisateur peut volontairement choisir de limiter une performance) ou des droits (par exemple l'abonnement de l'utilisateur ne lui permet qu'un service limité) de l'utilisateur. La latence est encore un critère technique qui au-delà d'une certaine valeur va interdire certains services. L'heure, le jour, interviennent pour permettre de définir des comportements différents, par exemple en fonction de besoins variables ou de tarifications différentes (heures pleines / heures creuses). Parmi les critères interviennent encore des préférences utilisateur, qui peut choisir de privilégier un réseau de son choix. Le coût d'utilisation est bien évidemment un critère important à prendre en compte. Tout choix de connexion optimise avantageusement le coût, à qualité de service similaire, ou même accepte une certaine diminution de qualité apportant une réduction de coût substantielle. La zone géographique peut encore être prise en compte pour modifier l'ordonnancement des réseaux. D'autres critères peuvent bien évidement être ajoutés ici et la liste donnée n'est qu'indicative.

La prise en compte de ces différents critères, pouvant être contradictoires, est avantageusement réalisée en utilisant des règles de gestion. Ces règles de gestion se présentent, par exemple, sous la forme :
SI <condition> ALORS <action>, avec
   <condition> := (critère x1 = valeur y1) R1 (critère x2 = valeur y2) R2 (critère x3 = valeur y3)
où critère xi désigne un des critères retenus,
et yi désigne une valeur ou un intervalle de valeur possible pour ledit critère, et Ri une relation booléenne parmi : OU, ET, NET, NOU, NON, etc; et
<action> une action consistant soit en un choix d'un réseau préféré, soit en une note ou classement, absolu ou relatif accordé à un réseau particulier.

Il est ainsi possible de disposer d'un premier jeu de règles de gestion associé au choix/ordonnancement du réseau hôte et d'un deuxième jeu de règles de gestion associé au choix/ordonnancement du réseau visité.

Il est encore possible de disposer d'un jeu de règles croisées, permettant de réaliser une optimisation globale et simultanée du réseau hôte et du réseau visité.

Comme indiqué pour le champ action, une règle de gestion peut déterminer un réseau préféré. Selon un autre mode de réalisation, il est encore possible que l'ordonnancement produise/gère une liste de réseaux visités et une liste de réseaux hôte.

Avantageusement, chacune de ces listes est alors ordonnée par ordre de préférence et remise à jour dynamiquement en fonction des critères retenus et de leur évolution dans le temps. Une application des règles de gestion pertinentes, en fonction des valeurs des critères, permet de mettre à jour l'ordre des réseaux dans ladite liste.

Ainsi, par exemple, une règle qui valorise la présence d'un service de transmission de données haut débit, peut conduire à ajouter un bonus de points à tous les réseaux qui proposent un tel service. L'application de ladite règle modifie une note associée à chaque réseau. Un classement des réseaux par ordre décroissant de leur note, réordonne lesdits réseaux. Après application de toutes les règles il est obtenu une liste de réseaux ordonnée par ordre de préférence selon les critères retenus. Le premier réseau de la liste est alors candidat préféré pour réaliser la connexion.

Selon un mode de réalisation particulier, il est encore possible de gérer une optimisation globale du couple réseau hôte / réseau visité. Dans ce cas il est géré une liste ordonnée des couples possibles (pour lesquels il existe un accord d'itinérance) réseau hôte / réseau visité, les règles s'appliquant alors au réseau hôte, au réseau visité ou encore au couple des deux. Le premier couple de la liste ordonnée est alors candidat préféré pour réaliser la connexion.

Tant les critères que les règles de gestion sont stockés localement dans le terminal mobile 1. Ils sont avantageusement configurés par l'utilisateur du terminal mobile 1 lui-même, par exemple, au moyen d'une interface de dialogue dédiée. Il est encore possible de télécharger, en remplacement de tout ou partie, de nouvelles règles de gestion, depuis le réseau, par exemple au moyen d'un protocole OTA.

La ou les listes ordonnées de réseaux sont avantageusement remises à jour dynamiquement afin de tenir compte de l'évolution en temps réel des valeurs des critères.

Une telle mise à jour peut être réalisée périodiquement, selon une période temporelle donnée.

Alternativement ou de manière combinée, cette mise à jour peut être réalisée de manière évènementielle. Dans ce cas une mise à jour est avantageusement réalisée lorsqu'une valeur d'un des critères retenus évoluent de manière significative ou encore lorsque se produit un évènement sélectionné parmi : activation d'une carte SIM, perte d'un signal, découverte d'un signal, activation d'un terminal mobile, modification d'une préférence utilisateur, activation externe.

La plupart de ces évènements sont observés localement par le terminal mobile 1 lui-même.

L'activation externe correspond à un évènement issu par exemple du réseau hôte et visant à provoquer une remise à jour. Une telle activation externe est déclenchée, par exemple, par la réception par le terminal mobile 1 d'un SMS ou d'un message de service USSD. L'activation externe comprend encore une demande expresse de mise à jour par l'utilisateur.

La ou les listes ainsi ordonnées permettent d'établir une connexion en sélectionnant le premier réseau/couple de la/chaque liste.

Afin de ne pas risquer des changements intempestifs de réseau visité 2, 2', 2", et/ou de réseau hôte 3, 3', 3", ce qui ne manquerait pas de créer des problèmes de continuité de service et une surcharge d'échanges de messages de signalement à chaque changement, il peut être privilégié une continuité dans l'utilisation d'un réseau. Dans ce cas, soit le changement de réseau en fonction de la liste préférentielle, soit la mise à jour de la liste préférentielle elle-même, peut avantageusement être temporellement filtré. Un tel filtrage est typiquement réalisé au moyen d'un filtre à hystérésis.

La définition des critères et le réglage des valeurs des seuils qui sont associés à ces critères pour faire les arbitrages de réseau hôte et de réseau visité sont réalisés de telle manière à permettre d'éviter des basculements intempestifs. Ces réglages peuvent s'affiner pour optimiser les règles de fonctionnement.

Un terminal mobile 1 se connecte à un réseau invité 2, 2', 2", via un réseau hôte 3, 3', 3". Le réseau hôte 3, 3', 3" est le réseau auprès duquel l'utilisateur dispose, pour son terminal mobile 1, d'un droit d'accès au réseau de téléphonie. Ce droit d'accès se matérialise, par exemple, par une carte SIM, et particulièrement par un identificateur ou code IMSI qui identifie ledit terminal mobile 1 auprès du réseau hôte 3, 3', 3".

Pour rappel, IMSI est l'acronyme de International Mobile Subscriber Identity qui peut être traduit par numéro d'identité internationale de l'abonné mobile.

Selon l'art antérieur, un code IMSI est associé de manière unique à une carte SIM et chaque réseau hôte 3, 3', 3" nécessite un code IMSI disposé sur une carte SIM indépendante. Le numéro IMSI permet à un réseau (typiquement GSM ou UMTS) d'identifier l'usager. Ce numéro est stocké dans la carte SIM respectivement USIM. Avec les solutions de l'art antérieur, l'utilisateur est ainsi tenu de changer de carte SIM, ou le cas échéant de disposer d'un terminal mobile 1 acceptant simultanément plusieurs cartes SIM, pour pouvoir changer de réseau hôte 3, 3', 3".

Selon une caractéristique avantageuse, le dispositif selon l'invention permet de modifier, de manière logicielle, l'identificateur ou code IMSI d'un terminal mobile 1 dans une unique et même carte SIM.

Il est ainsi possible d'emprunter, au moins le temps de bénéficier d'un accord d'itinérance, pour se connecter à un réseau visité 2, 2', 2", un IMSI d'un réseau hôte 3, 3', 3". Ainsi le choix d'un réseau hôte 3, 3', 3" consiste à choisir un IMSI associé à ce réseau hôte 3, 3', 3" et à « installer » ledit IMSI comme identificateur du terminal mobile 1, par exemple dans sa carte SIM.

Ainsi un utilisateur, typiquement en relation contractuelle avec un opérateur, peut possiblement sélectionner un réseau hôte parmi une pluralité de réseaux hôtes proposés par cet opérateur, chaque réseau hôte proposé étant associé à un identificateur / code IMSI dans le terminal mobile 1. Le terminal mobile est connecté à un seul réseau hôte à la fois. Par conséquent, à chaque instant, un seul identificateur / code IMSI parmi les identificateurs / codes IMSI du terminal est actif/endossé. Pour se détacher d'un premier réseau hôte et s'attacher à un deuxième réseau hôte, l'invention prévoit de désactiver l'identificateur / code IMSI dédié au premier réseau hôte et d'endosser l'identificateur / code IMSI associé à l'utilisateur et dédié au deuxième réseau hôte. L'utilisateur peut ainsi réaliser une connexion avec un réseau visité via ce deuxième réseau hôte, ce qui lui permet par exemple de bénéficier de ses accords d'itinérance.

De manière avantageuse, l'invention prévoit de maintenir un seul profil abonné tout en utilisant de multiples identificateurs / codes IMSI. Un profile abonné est typiquement le profile que maintien l'opérateur avec lequel l'utilisateur a passé un contrat pour pouvoir utiliser les télé-services offerts via le terminal mobile 1.

Le maintien d'un même profile utilisateur tout en tout en utilisant de multiples identificateurs / codes IMSI permet une continuité de service et surtout une continuité de connexion quel que soit les réseaux sélectionnés.

Des précisions pour maintenir ce profile utilisateur unique tout en utilisant de multiples identificateurs / codes IMSI sont données ci-dessous. Par souci de clarté, dans les explications ci-dessous les identificateurs sont des codes IMSI sans que cela soit limitatif. Les abonnés sont provisionnés dans le coeur de réseau de leur opérateur comme des utilisateurs multi-IMSI. A chaque instant, chaque abonné est associé de façon univoque à un ensemble variable d'identifiants IMSI. Chaque abonné est, par contre, associé à un unique MSISDN (acronyme de Mobile Subscriber Integrated Services Digital Network Number signifiant littéralement numéro d'abonné mobile lui permettant d'avoir accès à un réseau numérique à intégration de services). De façon simplifiée, le numéro MSISDN est de manière connue, le numéro d'appel auquel l'utilisateur est joignable.

Chaque fois que le programme embarqué au sein du terminal mobile 1 prend l'initiative de sélectionner un nouveau triplet <réseau hôte, identifiant du réseau hôte (IMSI), réseau visité> il effectue, avantageusement de façon transparente pour l'utilisateur, les étapes suivantes:
- la clôture de la session en cours auprès du réseau visité courant. Cette étape inclut une procédure de dés-enregistrement, typiquement sous forme d'un message de type 'IMSI detach',²
- la préparation des paramètres nécessaires à la procédure d'attachement auprès du nouveau réseau visité choisi,
- l'initiation d'une procédure d'attachement auprès du nouveau réseau visité choisi, sous le nouvel identifiant hôte choisi, typiquement sous forme d'un message de type 'IMSI attach'.

La procédure d'attachement au nouveau réseau visité, route la demande d'identification de l'abonné vers le même Système d'Information Opérateur pour tous les IMSI de l'abonné qui sont associés à ce terminal et plus précisément à la carte SIM utilisée dans ce terminal mobile. De manière connue un HLR (acronyme de Home Location Register signifiant enregistreur de localisation nominal) connaît la correspondance entre un MSISDN et un IMSI. Dans le cadre de l'invention, le HLR associe un MSISDN à une pluralité d'IMSI. Ainsi, au coeur du Système d'Information Opérateur, le HLR fournit des informations issues du même profil d'abonné quel que soit l'IMSI contenu dans la requête. Entre autres informations, le même numéro d'appel (MSISDN) est fourni par le HLR pour tous les IMSI associés à un abonné donné. Cet abonné reste donc joignable au même numéro quel que soit l'identifiant hôte (IMSI) sous lequel il s'est enregistré auprès du réseau visité. Les télé-services associés à ce profile abonné continuent donc d'être disponible de façon transparente.

Selon un mode de réalisation particulier mais non limitatif, l'invention prévoit d'actualiser la liste des réseaux hôtes potentiels pour le terminal mobile 1 au moyen d'un protocole OTA (de l'anglais Over The Air). Si un réseau hôte doit être rajouté, l'opérateur ou l'un de ses partenaires transmet au terminal mobile 1 un nouvel identificateur / code IMSI correspondant au nouveau réseau hôte.

Selon un mode de réalisation particulier mais non limitatif, l'identificateur/code IMSI n'étant utilisé que temporairement, il est réutilisé pour différents utilisateurs. Dans ce cas un serveur du réseau, alloue des codes IMSI en conservant, le temps de leur allocation, une table de correspondance utilisateur / code IMSI.

L'invention peut encore être avantageusement utilisée, dans une infrastructure de télécommunication mobile, pour réaliser un procédé de détermination d'une cartographie de couverture d'une zone géographique donnée, Ainsi si un régulateur de télécommunications (tels que l'ARCEP Autorité française de Régulation des Communications Electroniques et Postes ou l'OFCOM, autorité indépendante au Royaume-Uni, ...) souhaite connaître la cartographie (réelle) de couverture des opérateurs d'un pays (au delà des informations déclaratives notifiées par les opérateur au titre de leurs obligations) il peut utiliser les informations issues de l'invention, afin d'obtenir une cartographie des capacités de raccordement dynamiques sur tous les réseaux, telles que perçues par les terminaux.

Il est ainsi possible, en utilisant les différents terminaux fixes et/ou mobiles présents dans une zone géographique donnée que l'on souhaite cartographier, de réaliser un audit, afin d'obtenir une cartographie de couverture de tous les opérateurs/réseaux (visités et hôtes) de ladite zone géographique.

Pour cela, ledit procédé mis en oeuvre grâce à l'invention, comprend une étape de récupération auprès des terminaux fixes ou mobiles présents dans la zone géographique, des données : réseau visité, réseau hôte, localisation du terminal. Cette récupération peut être réalisée de manière régulière, spontanément envoyé par chaque terminal, ou encore à l'occasion d'un événement, tel l'établissement d'une communication.

Afin d'obtenir une information de cartographie statistiquement significative, il convient de maintenir l'observation et la récupération durant une période de temps suffisamment longue.

Bien qu'il soit décrit dans la présente un mode de réalisation préféré de l'invention, il doit être bien compris que l'invention n'est pas limitée à ce mode, et que des variations peuvent être apportées à l'intérieur de la portée des revendications suivantes.

## Revendications

1. Dispositif, dans une infrastructure de télécommunication mobile, apte à choisir un réseau visité (2, 2', 2") et à connecter audit réseau visité (2, 2', 2") choisi un terminal mobile (1) associé à un réseau hôte (3, 3', 3"), ledit dispositif étant localisé dans ledit terminal mobile (1), le dispositif étant configuré de sorte à pouvoir choisir un réseau hôte parmi une pluralité de réseaux hôtes (3, 3', 3") qui ne sont pas à portée du terminal mobile (1) et de sorte à modifier le réseau hôte (3, 3', 3") associé au terminal mobile (1) en le remplaçant par ledit réseau hôte choisi (3, 3', 3"), le dispositif étant configuré de sorte à pouvoir effectuer à la fois le choix du réseau hôte (3, 3', 3") et à la fois le choix du réseau visité (2, 2', 2") au moyen d'un ordonnancement prenant en compte au moins un critère
le dispositif étant en outre configuré de sorte que le choix d'un réseau visité (2, 2', 2") et le choix d'un réseau hôte (3, 3', 3"), utilisent des règles de gestion notant, en fonction dudit au moins un critère, toutes les paires formées chacune par un réseau visité (2, 2', 2") détecté par le terminal mobile (1) et un réseau hôte (3, 3', 3") parmi la pluralité de réseaux hôte (3, 3', 3"), chaque paire étant formée par un réseau visité (2, 2', 2") et un réseau hôte (3, 3', 3") ayant ensemble un accord d'itinérance,
le réseau visité (2, 2', 2") choisi et le réseau hôte (3, 3', 3") choisi étant le réseau visité (2, 2', 2") et le réseau hôte (3, 3', 3") de la paire recevant la note la plus élevée,
ledit au moins un critère étant pris parmi :
- un niveau de puissance du signal radio reçu,
- une bande passante offerte,
- une qualité de service,
- une latence,
ledit au moins un critère évoluant dans le temps, ledit au moins un critère étant mesuré par ledit terminal mobile (1),
la mesure dudit au moins un critère ainsi que le choix du réseau visité (2, 2', 2") et le choix du réseau hôte (3, 3', 3") étant effectués en cours de déplacement du terminal mobile (1) et/ou au cours d'une communication du terminal mobile (1).

2. Dispositif selon la revendication précédente, comprenant un logiciel (5) stocké dans une carte ou une puce équipée d'un microcontrôleur et apte à coopérer avec le terminal mobile (1) pour réaliser lesdits choix et la connexion, le dispositif étant configuré de sorte qu'en une zone géographique donnée, le dispositif effectue à la fois le choix du réseau hôte (3, 3', 3") et le choix du réseau visité (2, 2', 2").

3. Dispositif selon l'une quelconque des revendications précédentes, configuré de sorte à comprendre pour chaque réseau hôte (3, 3', 3") parmi la pluralité de réseaux hôte (3, 3', 3") un identificateur identifiant de manière unique le terminal mobile (1), le dispositif étant en outre configuré de manière à ce que le terminal mobile (1) endosse l'identificateur associé au réseau hôte choisi pour se connecter via ledit réseau hôte choisi et dans lequel l'identificateur est un numéro IMSI, numéro d'identité internationale de l'abonné du terminal mobile.

4. Dispositif selon la revendication précédente, dans lequel un unique numéro MSISDN, numéro de l'abonné du terminal mobile dans un réseau numérique à intégration de services, est associé à l'ensemble des numéros IMSI identifiant de manière unique le terminal mobile (1).

5. Dispositif selon l'une quelconque des revendications précédentes, dans lequel ledit ordonnancement utilisé pour le choix d'un réseau visité (2, 2', 2") et le choix d'un réseau hôte (3, 3', 3"), produit une liste de réseaux visités (2, 2', 2") et une liste de réseaux hôtes (3, 3', 3"), ordonnée par ordre de préférence.

6. Dispositif selon la revendication précédente, dans lequel le dispositif est agencé pour remettre à jour périodiquement ladite liste ordonnée.

7. Dispositif selon les revendications 5 ou 6, configuré de sorte que ladite liste ordonnée est remise à jour de manière évènementielle, à la survenue d'au moins un évènement sélectionné parmi :
- activation d'une carte SIM,
- perte d'un signal,
- découverte d'un signal,
- activation d'un terminal mobile,
- modification d'une préférence utilisateur,
- activation externe,
- la réception d'un appel ou d'un message.

8. Dispositif selon l'une quelconque des trois revendications précédentes, où la remise à jour de ladite liste de réseaux visités, respectivement de réseaux hôtes, est filtrée temporellement, afin d'éviter des changements intempestifs de réseau visité (2, 2', 2"), respectivement de réseau hôte (3, 3', 3").

9. Terminal mobile comprenant un dispositif selon l'une quelconque des revendications 1 à 8.

10. Procédé pour infrastructure de télécommunication mobile, le procédé étant mis en oeuvre dans un terminal mobile (1), le procédé comprenant une étape de choix d'un réseau visité (2, 2', 2") et une étape de connexion audit réseau visité (2, 2', 2") choisi du terminal mobile (1) associé à un réseau hôte (3), **caractérisé en ce qu'**il comprend en outre une étape comprenant le choix d'un réseau hôte (3, 3', 3") parmi une pluralité de réseaux hôtes (3, 3', 3") associés au terminal mobile (1) et qui ne sont pas à portée du terminal mobile (1), le choix du réseau hôte (3, 3', 3") et le choix du réseau visité (2, 2', 2") étant effectuées dans ledit terminal mobile (1) et au moyen d'un ordonnancement prenant en compte au moins un critère et le réseau visité (2, 2', 2") choisi ayant un accord d'itinérance avec le réseau hôte (3, 3', 3") choisi, dans lequel le choix du réseau visité (2, 2', 2") prend en compte au moins un premier critère,
le procédé étant en outre configuré de sorte que le choix d'un réseau visité (2, 2', 2") et le choix d'un réseau hôte (3, 3', 3"), utilisent des règles de gestion notant, en fonction dudit au moins un critère, toutes les paires formées chacune par un réseau visité (2, 2', 2") détecté par le terminal mobile (1) et un réseau hôte (3, 3', 3") parmi la pluralité de réseaux hôte (3, 3', 3"), chaque paire étant formée par un réseau visité (2, 2', 2") et un réseau hôte (3, 3', 3") ayant ensemble un accord d'itinérance,
le réseau visité (2, 2', 2") choisi et le réseau hôte (3, 3', 3") choisi étant le réseau visité (2, 2', 2") et le réseau hôte (3, 3', 3") de la paire recevant la note la plus élevée,
ledit au moins un critère étant pris parmi :
- un niveau de puissance du signal radio reçu,
- une bande passante offerte,
- une qualité de service,
- une latence,
ledit au moins un critère évoluant dans le temps, ledit au moins un critère étant mesuré par ledit terminal mobile (1),
la mesure dudit au moins un critère ainsi que le choix du réseau visité (2, 2', 2") et le choix du réseau hôte (3, 3', 3") étant effectués en cours de déplacement du terminal mobile (1) et/ou au cours d'une communication du terminal mobile (1).

11. Produit programme d'ordinateur comprenant des instructions aptes à être exécutées par un dispositif localisé dans un terminal mobile (1), lesdites instructions permettant de mettre en oeuvre le procédé selon la revendication 10.

## Patentansprüche

1. Vorrichtung in einer mobilen Telekommunikationsinfrastruktur, die in der Lage ist, ein besuchtes Netzwerk (2, 2', 2'') auszuwählen und mit besagtem ausgesuchten besuchten Netzwerk (2, 2', 2'') ein mobiles, einem Heimatnetzwerk (3, 3', 3'') zugeordnetes Endgerät (1) zu verbinden, wobei sich besagte Vorrichtung in dem mobilen Endgerät (1) befindet, wobei die Vorrichtung so konfiguriert ist, dass aus einer Vielzahl von Heimatnetzwerken (3, 3', 3''), welche nicht in Reichweite des mobilen Endgeräts (1) sind, ein Heimatnetzwerk ausgewählt werden kann, und so, dass das dem mobilen Endgerät (1) zugeordnete Heimatnetzwerk (3, 3', 3'') durch Ersetzen des ausgewählten Heimatnetzwerks (3, 3', 3'') gewechselt wird, wobei die Vorrichtung so konfiguriert ist, dass mittels einer Programmierung unter Berücksichtigung mindestens eines Kriteriums zum einen das Heimatnetzwerk (3, 3', 3'') und zum andern das besuchte Netzwerk (2, 2', 2'') ausgewählt werden können,
wobei die Vorrichtung des Weiteren so konfiguriert ist, dass bei der Wahl eines besuchten Netzwerks (2, 2', 2'') und der Wahl eines Heimatnetzwerks (3, 3', 3'') Verwaltungsregeln angewendet werden, bei denen unter Berücksichtigung des mindestens einen Kriteriums alle Paare bewertet werden, die aus einem durch das mobile Endgerät (1) erkannten besuchten Netzwerk (2, 2', 2'') und einem Heimatnetzwerk (3, 3', 3'') einer Vielzahl von Heimatnetzwerken (3, 3', 3'') gebildet werden, wobei jedes Paar durch ein besuchtes Netzwerk (2, 2', 2") und ein Heimatnetzwerk (3, 3', 3") gebildet wird, für die eine Roaming-Vereinbarung gilt,
wobei das ausgewählte besuchte Netzwerk (2, 2', 2'') und das ausgewählte Heimatnetzwerk (3, 3', 3'') das besuchte Netzwerk (2, 2', 2'') und das Heimatnetzwerk (3, 3', 3'') des Paares sind, welches die höchste Bewertung erhält, wobei mindestens ein Kriterium:
- die Stärke des empfangenen Funksignals,
- die angebotene Bandbreite,
- die Dienstqualität,
- die Verzögerung ist,
wobei sich das mindestens eine Kriterium mit der Zeit verändert, wobei das mindestens eine Kriterium von besagtem mobilen Endgerät (1) gemessen wird,
wobei die Messung des mindestens einen Kriteriums sowie die Wahl des besuchten Netzwerks (2, 2', 2'') und die Wahl des Heimatnetzwerks (3, 3', 3'') während der Fortbewegung des mobilen Endgeräts (1) und/oder während einer Kommunikation des mobilen Endgeräts (1) erfolgen.

2. Vorrichtung nach dem vorhergehenden Anspruch, welche einer Software (5) enthält, die in einer Karte oder einem Chip mit Mikrokontroller gespeichert ist und in der Lage ist, mit dem mobilen Endgerät (1) zusammen zu wirken, um besagte Netzwerke auszuwählen und die Verbindung herzustellen, wobei die Vorrichtung so konfiguriert ist, dass sie in einem bestimmten geographischen Raum gleichzeitig das Heimatnetzwerk (3, 3', 3'') und das besuchte Netzwerk (2, 2', 2'') auswählt.

3. Vorrichtung nach einem der vorhergehenden Ansprüche, die so konfiguriert ist, dass für jedes Heimatnetzwerk (3, 3', 3'') einer Vielzahl von Heimatnetzwerken (3, 3', 3'') ein Identifikator vorhanden ist, der das mobile Endgerät (1) einmalig identifiziert, wobei die Vorrichtung des Weiteren so konfiguriert ist, dass das mobile Endgerät (1) den mit dem ausgewählten Heimatnetzwerk verknüpften Identifikator übernimmt, um sich über besagtes ausgewähltes Heimatnetzwerk, in welchem der besagte Identifikator eine IMSI-Nummer, eine internationale Identitätsnummer des Abonnenten des mobilen Endgeräts ist, einzuloggen.

4. Vorrichtung nach dem vorhergehenden Anspruch, in welcher eine einheitliche MSISDN-Nummer, die Teilnehmernummer des mobilen Endgeräts in einem diensteintegrierenden digitalen Fernmeldenetz, mit allen IMSI-Nummern verknüpft ist, die das mobile Endgerät (1) eindeutig identifizieren.

5. Vorrichtung nach einem der vorhergehenden Ansprüche, in welcher besagte Programmierung, die für die Wahl eines besuchten Netzwerks (2, 2', 2'') und die Wahl eines Heimatnetzwerks (3, 3', 3'') benutzt wird, eine Liste von besuchten Netzwerken (2, 2', 2") und eine Liste von Heimatnetzwerken (3, 3', 3'') erstellt, die in der Reihenfolge der Präferenz angeordnet werden.

6. Vorrichtung nach dem vorhergehenden Anspruch, in welcher die Vorrichtung so angeordnet ist, dass sie besagte geordnete Liste regelmäßig aktualisiert.

7. Vorrichtung gemäß den Ansprüchen 5 oder 6, die so konfiguriert ist, dass besagte geordnete Liste ereignisbezogen, das heißt bei Auftreten mindestens eines der nachfolgenden Ereignisse, aktualisiert wird, nämlich bei:
- der Aktivierung einer SIM Karte,
- dem Verlust eines Signals,
- der Entdeckung eines Signals,
- der Aktivierung eines mobilen Endgeräts,
- der Änderung einer Benutzerpräferenz,
- einer externen Aktivierung,
- dem Empfang eines Anrufs oder einer Nachricht.

8. Vorrichtung nach einem der drei vorhergehenden Ansprüche, in der die Aktualisierung der besagten Liste der besuchten Netzwerke bzw. der Heimatnetzwerke temporal gefiltert wird, um einen unerwünschten Wechsel des besuchten Netzwerks (2, 2', 2'') bzw. des Heimatnetzwerks (3, 3', 3'') zu vermeiden.

9. Mobiles Endgerät, welches eine Vorrichtung gemäß einem der Ansprüche 1 bis 8 enthält.

10. Verfahren für eine mobile Telekommunikationsinfrastruktur, wobei das Verfahren in einem mobilen Endgerät (1) angewendet wird, wobei das Verfahren einen Schritt enthält, in dem das besuchte Netzwerk (2, 2', 2'') ausgewählt wird und einen Schritt, in dem das einem Heimatnetzwerk (3) zugeordnete mobile Endgerät (1) mit dem ausgewählten besuchten Netzwerk (2, 2', 2'') verbunden wird, **dadurch gekennzeichnet, dass** es des Weiteren einen Schritt enthält, in dem ein Heimatnetzwerk (3, 3', 3'') aus einer Vielzahl von Heimatnetzwerken (3, 3', 3''), welche dem mobilen Endgerät (1) zugeordnet und nicht in Reichweite des mobilen Endgeräts (1) sind, ausgewählt wird, wobei die Wahl des Heimatnetzwerks (3, 3', 3'') und die Wahl des besuchten Netzwerks (2, 2', 2'') in besagtem mobilen Endgerät (1) mittels einer Programmierung erfolgt, in welcher mindestens ein Kriterium berücksichtigt wird sowie das ausgewählte besuchte Netzwerk (2, 2', 2''), für das mit dem ausgewählten Heimatnetzwerk (3, 3', 3'') eine Roaming-Vereinbarung gilt, in welchem bei der Wahl des besuchten Netzwerks (2, 2', 2'') mindestens ein erstes Kriterium berücksichtigt wird,
wobei das Verfahren des Weiteren so konfiguriert ist, dass bei der Wahl des besuchten Netzwerks (2, 2', 2'') Verwaltungsregeln angewendet werden, anhand derer, je nach dem mindestens einen Kriterium, alle Paare bewertet werden, die durch ein vom mobilen Endgerät (1) erkannten besuchten Netzwerk (2, 2', 2''), und einem Heimatnetzwerk (3, 3', 3'') einer Vielzahl von Heimatnetzwerken (3, 3', 3'') gebildet wird, wobei jedes Paar durch ein besuchtes Netzwerk (2, 2', 2'') und ein Heimatnetzwerk (3, 3', 3'') gebildet wird, für welche eine Roaming- Vereinbarung gilt,
wobei das ausgewählte besuchte Netzwerk (2, 2', 2'') und das ausgewählte Heimatnetzwerk (3, 3', 3'') das besuchte Netzwerk (2, 2', 2'') und das Heimatnetzwerk (3, 3', 3'') des Paares ist, welches die höchste Bewertung erhält,
wobei das mindestens eine Kriterium:
• die Stärke des empfangenen Funksignals,
• die gebotene Bandbreite,
• die Dienstqualität,
• die Verzögerung ist,
wobei sich mindestens ein Kriterium mit der Zeit verändert, und dieses mindestens eine Kriterium durch besagtes mobiles Endgerät (1) gemessen wird,
wobei die Messung des mindestens einen Kriteriums sowie die Wahl des besuchten Netzwerks (2, 2', 2'') und die Wahl des Heimatnetzwerks (3, 3', 3'') während der Fortbewegung des mobilen Endgeräts (1) und/oder während einer Kommunikation des mobilen Endgeräts (1) erfolgt.

11. Computerprogrammprodukt, welches Anweisungen enthält, die über eine Vorrichtung ausgeführt werden können, die sich in einem mobilen Endgerät (1) befindet, wobei besagte Anweisungen die Anwendung des Verfahrens nach Anspruch 10 ermöglichen.

## Claims

1. A device in a mobile telecommunication infrastructure, that is capable of selecting a visited network (2, 2', 2") and of connecting to said selected visited network (2, 2', 2") a mobile terminal (1) associated with a host network (3, 3', 3"), with said device being located in said mobile terminal (1), with said device being so configured as to be capable of selecting a host network among a plurality of host networks (3, 3', 3") which are not within the range of the mobile terminal (1) and so as to modify the host network (3, 3', 3") associated with the mobile terminal (1) by replacing same by said selected host network (3, 3', 3"), with said device being so configured as to be capable of carrying out both the selection of the host network (3, 3', 3") and the selection of the visited network (2, 2', 2") by means of a sequencing taking into account at least one criterion,
with said device being further so configured that the selection of a visited network (2, 2', 2") and the selection of a host network (3, 3', 3") apply management rules which give marks, according to the at least one criterion, all the pairs, each formed by a visited network (2, 2', 2") detected by the mobile terminal (1) and a host network (3, 3', 3") among the plurality of host networks (3, 3', 3"), with each pair consisting of a visited network (2, 2', 2") and a host network (3, 3', 3") bound by a roaming agreement,
with the selected visited network (2, 2', 2") and the selected host network (3, 3', 3") being the visited network (2, 2', 2") and the host network (3, 3', 3") of the pair receiving the highest mark,
with said at least one criterion being taken from:
- the power level of the received radio signal,
- the bandwidth provided,
- the quality of service,
- the latency,
with said at least one criterion changing over time, with said at least one criterion being measured by said mobile terminal (1),
with the measurement of said at least one criterion and the selection of the visited network (2, 2', 2") and the selection of the host network (3, 3', 3") being carried out when the mobile terminal (1) is moving and/or when the mobile terminal (1) is in communication.

2. A device according to the preceding claim, comprising a software program (5) stored in a card or a chip equipped with a microcontroller and capable of cooperating with the mobile terminal (1) for carrying out said selection and connection, with the device being so configured that, in a given geographical area, the device carries out both the selection of the host network (3, 3', 3") and the selection of the visited network (2, 2', 2").

3. A device according to any one of the preceding claims, so configured as to comprise, for each host network (3, 3', 3") among the plurality of host systems (3, 3', 3"), an identifier identifying, in a unique way, the mobile terminal (1), with the device being further so configured that the mobile terminal (1) assumes the identifier associated with the selected host network to connect via said selected host network and wherein the identifier is a IMSI number, i.e. the international mobile subscriber identification number of the mobile terminal subscriber.

4. A device according to the preceding claim, wherein a unique MSISDN number, i.e. the telephone number of the mobile terminal subscriber in an integrated services digital network, is associated with all the IMSI numbers identifying in a unique way the mobile terminal (1).

5. A device according to any one of the preceding claims, wherein said sequencing used for selecting a visited network (2, 2', 2") and selecting a host network (3, 3', 3") gives a list of visited networks (2, 2', 2") and a list of host networks (3, 3', 3") ordered in an order of preference.

6. A device according to the preceding claim, wherein the device is so arranged as to periodically update said ordered list.

7. A device according to claims 5 or 6, so configured that the ordered list is updated in an event-driven way, upon the occurrence of at least one event selected among:
- activation of a SIM card,
- loss of a signal,
- finding a signal,
- activation of a mobile terminal,
- modification of a user preference,
- external activation,
- receiving a call or a message.

8. A device according to any one of the preceding three claims, wherein the updating of said list of visited networks, respectively host networks, is filtered temporally, in order to avoid untimely changes in the visited network (2, 2', 2"), respectively the host network (3, 3', 3").

9. A mobile terminal comprising a device according to any one of claims 1 to 8.

10. A method for a mobile telecommunication infrastructure, with said method being implemented in a mobile terminal (1), with the method comprising a step of selecting a visited network (2, 2', 2") and a step of connection to said selected visited network (2, 2', 2") of the mobile terminal (1) associated with a host network (3, 3', 3"), **characterized in that** it further comprises a step comprising the selection of a host network (3, 3', 3") among a plurality of host networks (3, 3', 3") associated with the mobile terminal (1) and which are not within the range of the mobile terminal (1), with the selection of the host network (3, 3', 3") and the selection of the visited network (2, 2', 2") being carried out in said mobile terminal (1) and using a sequencing taking into account at least one criterion and the selected visited network (2, 2', 2") having a roaming agreement with the selected host network (3, 3', 3"), wherein the selection of the visited network (2, 2', 2") takes into account at least one first criterion,
with the method being further so configured that the selection of a visited network (2, 2', 2") and the selection of a host network (3, 3', 3") apply management rules which give marks, according to the at least one criterion, all the pairs, each formed by a visited network (2, 2', 2") detected by the mobile terminal (1) and a host network (3, 3', 3") among the plurality of host networks (3, 3', 3"), with each pair consisting of a visited network (2, 2', 2") and a host network (3, 3', 3") bound by a roaming agreement,
with the selected visited network (2, 2', 2") and the selected host network (3, 3', 3") being the visited network (2, 2', 2") and the host network (3, 3', 3") of the pair receiving the highest mark,
with said at least one criterion being taken from:
- the power level of the received radio signal,
- the bandwidth provided,
- the quality of service,
- the latency,
with said at least one criterion changing over time, with said at least one criterion being measured by said mobile terminal (1),
with the measurement of said at least one criterion and the selection of the visited network (2, 2', 2") and the selection of the host network (3, 3', 3") being carried out when the mobile terminal (1) is moving and/or when the mobile terminal (1) is in communication.

11. A computer program product comprising instructions adapted to be executed by a device located in a mobile terminal (1), with said instructions making it possible to implement the method according to claim 10.
